# EUROPÄISCHE PATENTSCHRIFT

(11) **EP 1 337 422 B1**
(45) Veröffentlichungstag und Bekanntmachung des Hinweises auf die Patenterteilung: **11.11.2009**
(21) Anmeldenummer: 01991766.5
(22) Anmeldetag: 29.11.2001
(51) Int. Cl.: B60T 8/32, B60T 7/04, B60T 11/16, B60Q 1/44

(54) **VORRICHTUNG ZUR ERMITTLUNG VON POSITIONEN UND BEWEGUNGEN EINES BREMSPEDALES FÜR EINE FAHRZEUGBREMSANLAGE**
DEVICE FOR DETECTING POSITIONS AND MOVEMENTS OF A BRAKE PEDAL FOR A VEHICLE BRAKE SYSTEM
DISPOSITIF POUR LA DETERMINATION DE POSITIONS ET DE MOUVEMENTS D'UNE PEDALE DE FREIN POUR UN SYSTEME DE FREINAGE DE VEHICULE

(30) Priorität: 29.11.2000 DE 10059128
(43) Veröffentlichungstag der Anmeldung: 27.08.2003
(73) Patentinhaber: Lucas Automotive GmbH, 56070 Koblenz (DE)
(72) Erfinder: MÜLLER, Jens, Hauke, 56294 Kalt (DE); KOETH, Boris, 65843 Sulzbach (DE); GRÜTER, Laurenz, 69115 Heidelberg (DE); SCHAUST, Karlheinz, 56133 Fachbach (DE)
(74) Vertreter: Schmidt, Steffen J.
(86) Internationale Anmeldenummer: PCT/EP2001/013943
(87) Internationale Veröffentlichungsnummer: WO 2002/043996

(56) Entgegenhaltungen:
- DE-A- 4 116 651
- DE-A- 19 622 545
- DE-A- 19 915 832
- DE-C- 19 543 583
- US-A- 4 914 916
- US-A- 5 201 838

## Beschreibung

### Gebiet der Erfindung

Die vorliegende Erfindung betrifft eine Vorrichtung, die es ermöglicht, Positionen und Bewegungen von Betätigungseinrichtungen und insbesondere von Bremspedalen für Fahrzeugbremsanlagen zu ermitteln. Insbesondere betrifft die vorliegende Erfindung eine Vorrichtung, mit der Positionen und Bewegungen von Kolben in Bremszylindern für Fahrzeugbremsanlagen erfasst werden, um zugrundeliegende Positionen und Bewegungen von entsprechenden Betätigungseinheiten und insbesondere von Bremspedalen zu ermitteln.

### Hintergrund der Erfindung

Zum Betrieb elektrisch oder elektronisch gesteuerter Fahrzeugbremsanlagen kann es erforderlich sein, Positionen und Bewegungen eines mit einer Betätigungseinrichtung für die Fahrzeugbremsanlage verbundenen oder als solche dienenden Bremspedals zu erfassen. So ist es bekannt, bei Antiblockiersystemen (ABS) und insbesondere bei ABS mit druckloser Rückförderung von Bremsfluid in einen Ausgleichsbehälter einen Sensor zu verwenden, der die Stellung des Bremspedales erfasst. Von dem Sensor ausgegebene Signale, die Bremspedalstellungen charakterisieren, werden zur Steuerung bei der ABS-Regelung und insbesondere zur Steuerung verwendeter Fluidpumpen verwendet. Bei sogenannten Bremsassistenten, die zumeist in Verbindung mit elektronisch gesteuerten Fahrzeugbremsanlagen verwendet werden und in kritischen Fahrsituationen eine maximale Bremskraftverstärkung gewährleisten sollen, werden Wegsensoren verwendet, um Bewegungen von Bremspedalen zu ermitteln.

Weiterhin ist eine Vorrichtung zum Messen der Bewegungen eines relativ zu einem anderen Bauteil bewegbaren Bauteils aus DE 196 22 545 A1 bekannt. Diese Vorrichtung weist an einem bewegbaren Bauteil in Bewegungsrichtung in regelmäßigen Abständen zueinander angeordnete, magnetisch wirksame Geberelemente auf, wobei das andere Bauteil zwei Sensoren hat, die eine Magnetfeldänderung sensieren.

Zur Erfassung von Positionen und/oder Bewegungen von Bremspedalen, ist es bekannt, geeignete Positions- und/oder Wegsensoren mit Bremspedalen oder damit gekoppelten Betätigungsstangen zu verbinden. Ferner werden für diesen Zweck Sensoren verwendet, die mit in Abhängigkeit von Positionen und Bewegungen eines Bremspedals bewegbaren Komponenten im Inneren eines Bremszylinders (z.B. Membran/bewegbare Wand eines Bremskraftverstärkers) verbunden sind. Derartige Sensoren sind herkömmlicherweise als mechanische Potentiometer ausgeführt und über eine Durchführung im Gehäuse eines Bremszylinders mit einer entsprechenden der genannten bewegbaren Komponenten desselben verbunden.

Bei der Verwendung von Sensoren zur Erfassung von Positionen und Bewegungen von Bremspedalen, die unmittelbar mit einem Bremspedal oder mit einer mit diesem gekoppelten Betätigungsstange für eine Fahrzeugbremsanlage verbunden sind, kann es zu Meßungenauigkeiten kommen. Diese sind unter anderem darauf zurückzuführen, dass aufgrund von radialen Wegkomponenten der Bremspedale oder der Betätigungsstange, mechanischer Verformungen dieser Einrichtungen bei einer Betätigung durch einen Fahrzeugführer, und dergleichen die erfaßten Positionen und Bewegungen für die Bremspedale nicht korrekt ermittelt werden. Dies ist insbesondere bei elektronisch gesteuerten Fahrzeugbremsanlagen von Nachteil, da dort die Positionen und Bewegungen von Bremspedalen verwenden, um einen von einem Fahrzeugführer gewünschten Bremsvorgang zu ermitteln und dementsprechend Bremskräfte erzeugen.

Die Verwendung von Sensoren, die, wie oben ausgeführt, mechanisch mit bewegbaren Komponenten im Inneren von Bremszylindern verbunden sind, macht es erforderlich, in Gehäusen derselben entsprechende Durchführungen vorzusehen. Derartige Durchführungen machen die Herstellung und Wartung solcher Fahrzeugbremsanlagen aufwendig. Des weiteren stellen sie eine zusätzliche Fehlerquelle dar, da durch sie beispielsweise Hydraulikfluid entweichen kann.

Zur Energieeinsparung bei einem Betrieb einer Fahrzeugbremsanlage ist es bekannt Bremslichtschalter zu verwenden, die auf eine Betätigung von Bremspedalen ansprechen. Bremslichtschalter liefern jedoch ungenaue Signale, d.h. Signale, die eine Betätigung von Bremspedalen angeben, aber nicht notwendigerweise eine tatsächliche Betätigung der entsprechenden Fahrzeugbremsanlage charakterisieren, da aufgrund von Toleranzen und Spiel von Bremspedalen eine Betätigung derselben nicht notwendigerweise auch zu einer tatsächlichen Aktivierung der Fahrzeugbremsanlage führen muss.

### Aufgabe der Erfindung

Aufgabe der Erfindung ist, eine Lösung bereitzustellen, um Positionen und Bewegungen von Betätigungseinrichtungen, insbesondere von Bremspedalen für Fahrzeugbremsanlagen, genau und energiesparend zu ermitteln.

### Kurzbeschreibung der Erfindung

Der vorliegenden Erfindung liegt der Ansatz zugrunde, Positionen und Bewegungen eines Kolbens in einem Bremszylinder einer Fahrzeugbremsanlage zu erfassen und aus den erfaßten Positionen und Bewegungen zugrundeliegende Positionen und Bewegungen einer entsprechenden Betätigungseinrichtung und insbesondere eines Bremspedales zu ermitteln. Auf diese Weise werden gewünschte Betätigungen der Fahrzeugbremsanlage durch einen Fahrzeugführer, d.h. Positionierungen und Bewegungen von Kolben der Bremszylinder, genauer ermittelt, da hierfür die tatsächliche Positionierung oder Bewegung eines Kolbens erfaßt wird. Ein weiterer Vorteil dieser Vorgehensweise besteht darin, dass die von einer Fahrzeugbremsanlage bereitgestellten Bremskräfte und insbesondere in Hydraulikkammern derselben vorliegende Drücke einfach ermittelt werden können. Da die wirksame, mit einem Hydraulikfluid zusammenwirkende Fläche eines Kolbens in einem Bremszylinder vorgegeben ist, kann in Kenntnis dieses Parameters in Verbindung mit ermittelten Positionen und Bewegungen des Kolbens der aktuell vorliegende Druck in der Hydraulikkammer und somit der bereitgestellte Bremsdruck ermittelt werden.

Im speziellen stellt die vorliegende Erfindung eine Vorrichtung zur Ermittlung von Positionen und Bewegungen einer Betätigungseinrichtung für eine Fahrzeugbremsanlage bereit. Die erfindungsgemäße Vorrichtung weist einen Signalgeber auf, der in einem Innenraum eines Bremszylinders einer Fahrzeugbremsanlage so anzuordnen ist, dass er in Abhängigkeit von Positionen und Bewegungen einer Betätigungseinrichtung für die Fahrzeugbremsanlage positionierbar und bewegbar ist. Ferner weist diese Vorrichtung eine Sensoreinrichtung auf, die von dem Signalgeber separat ausgeführt ist und außerhalb des Bremszylinders, beispielsweise an einer Außenfläche desselben, angebracht wird, um Positionen und Bewegungen des Signalgebers zu erfassen. Da der Signalgeber in Abhängigkeit von Positionen und Bewegungen der Betätigungseinrichtung positionierbar und betätigbar ist, werden auf diese Weise Positionen und Bewegungen der Betätigungseinrichtung ermittelt. Vorzugsweise ist der Signalgeber unmittelbar an einem Kolben des Bremszylinders angeordnet.

Um bei einem Betrieb eines Fahrzeuges Energie zu sparen, ist es vorteilhaft, Komponenten und insbesondere elektrisch oder elektronisch gesteuerte Einrichtungen nur dann in einen Betriebszustand zu versetzen, d.h. mit entsprechender Energie zu versorgen, wenn diese tatsächlich benötigt werden. Dem entsprechend ist es vorteilhaft, wenn sich solche Komponenten und Einrichtungen in einem Ruhezustand oder einem sogenannten Stand-by-Modus befinden, wenn sie nicht benötigt werden. Eine Verwendung von Bremslichtschaltern kann, wie bereits erwähnt, zum "Aufwecken" einer erfindungsgemäßen Vorrichtung führen, so dass diese aus einem Ruhezustand mit niedrigem oder keinem Energieverbrauch in einen Betriebszustand gebracht wird, obwohl keine tatsächliche Betätigung der Fahrzeugbremsanlage vorliegt. Daher ist es vorteilhaft, wenn die Vorrichtung Einrichtungen umfasst, die eine Betätigung der Betätigungseinrichtung, beispielsweise den Beginn einer Bewegung oder das Verlassen einer unbetätigten Position der Betätigungseinrichtung, genau detektieren. Vorzugsweise erzeugen solche Betätigungsermittlungseinrichtungen Signale, die unmittelbar oder mittelbar, beispielsweise unter Verwendung von Steuereinheiten für die Betätigungseinrichtung, oder einer Motorsteuereinheit (ECU), verwendet werden, um die Vorrichtung aus einem Ruhezustand, in dem keine Positionen und Bewegungen der Betätigungseinrichtung erfaßt werden, in einen Betriebszustand zu bringen, in dem Positionen und Bewegungen der Betätigungseinrichtung erfaßt werden. Dieses "Aufwecken" der Vorrichtung ermöglicht es, die Vorrichtung nur dann zu betreiben, d.h. mit der erforderlichen Betriebsenergie zu versorgen, wenn es tatsächlich erforderlich ist, Positionen und Bewegungen der Betätigungseinrichtung zu erfassen. Im Ruhezustand kann die Vorrichtung vollständig abgeschaltet sein, d.h. keinerlei Energie erhalten, oder in einer üblicherweise als Stand-by-Modus bezeichneten Weise betrieben werden, die, verglichen mit dem Betriebszustand, eine geringe Leistungszufuhr erfordert. Auf diese Weise kann der Energiebedarf der Vorrichtung und somit der Fahrzeugbremsanlage bzw, des Fahrzeuges verringert werden.

Ferner ist es vorgesehen, dass die von den Betätigungsermittlungseinrichtungen erzeugten Signale verwendet werden, um in Antwort auf eine Betätigung der Betätigungseinrichtung der Fahrzeugbremsanlage Bremslichter des Fahrzeuges zu aktivieren. Dies hat den Vorteil, dass die Fahrzeugbremslichter nur dann aktiviert werden, wenn tatsächlich eine Betätigung der Fahrzeugbremsanlage stattfindet, da herkömmliche Bremslichtschalter im Allgemeinen auf Betätigungen von Bremspedalen ansprechen, die aufgrund von Toleranzen und Spiel der Bremspedalmechanismen nicht notwendigerweise zu einer tatsächlichen Aktivierung von Fahrzeugbremsanlagen führen.

Ferner ist es vorgesehen, dass die Betätigungsermitdungseinrichtung einen sogenannten Reed-Schalter umfaßt, der durch den Signalgeber betätigbar ist.

Vorzugsweise ist die Betätigungsermittlungseinrichtung baueinheitlich mit der Sensoreinrichtung ausgeführt.

Bei Fahrzeugbremsanlagen mit zwei Bremskreisen, kann jedem der Bremskreise eine Betätigungsermittlungseinrichtung zugeordnet sein, wobei die Ausführungsform der erfindungsgemäßen Vorrichtung verwendet werden kann, bei der Signalgeber und Sensoreinrichtungen für den ersten und den zweiten Kolben vorgesehen sind. Alternativ können die Betätigungsermittlungseinrichtungen mit der Ausführungsform der erfindungsgemäßen Vorrichtung mit einem Signalgeber und einer Sensoreinrichtungen eingesetzt werden, wobei hier ein "Aufwecken" in Antwort auf eine Betätigung des ersten oder des zweiten Kolbens oder dann erfolgen kann, wenn beide Kolben aus ihren Ruhepositionen bewegt werden.

Bei einer Ausführungsform der vorliegenden Erfindung weist der Signalgeber Komponenten auf, die Magnetfelder erzeugen, die von der Sensoreinrichtung erfaßt werden. Hierbei ist es vorgesehen, dass der Signalgeber ringförmig oder scheibenförmig ist, um beispielsweise an einer Stirnfläche des Kolbens angebracht zu werden. Ferner können auch andere Signalgebertypen verwendet werden, die in Verbindung mit entsprechenden Sensoreinrichtungen elektrische und/oder magnetische Signale abgeben, die zur Erfassung von Positionen und Bewegungen geeignet sind. Hierbei können aktive Signalgeber, die geeignete Signale selbst erzeugen und abgeben, oder passive Signalgeber verwendet werden, die beispielsweise extern angeregt (z.B. durch eine entsprechende Sensoreinrichtung) Signale, wie z.B. durch Induktion erzeugte elektromagnetische Felder, abgeben.

Des weiteren stellt die vorliegende Erfindung einen Bremszylinder für eine Fahrzeugbremsanlage bereit, die in herkömmlicher Weise ein Gehäuse und einen Kolben aufweist, der im Inneren des Gehäuses bewegbar angeordnet ist. Erfindungsgemäß umfaßt der Bremszylinder eine Vorrichtung zur Ermittlung von Positionen und Bewegungen einer Betätigungseinrichtung der Fahrzeugbremsanlage, wie in den vorangegangenen Absätzen beschrieben.

Es ist bevorzugt, den Signalgeber an einer Stirnfläche des Kolbens anzuordnen. Zur ortsfesten Anordnung des Signalgebers relativ zu dem Kolben kann ein Federelement und/oder ein Klemmelement verwendet werden. Diese Vorgehensweise erlaubt es, verfügbare Kolben zu verwenden, ohne diese für die Anordnung des Signalgebers wesentlich modifizieren zu müssen. Alternativ oder ergänzend kann der Signalgeber auch mittels einer Klebverbindung an dem Kolben befestigt werden.

Bei Verwendung des Federelementes zur Positionierung des Signalgebers relativ zu dem Kolben wird vorzugsweise ein in dem Bremszylinder verwendetes Federelement mitgenutzt, das als Rückstellkräfte erzeugendes Element mit dem Kolben zusammenwirkt.

Wird beispielsweise ein Kolben verwendet, der in axialer Richtung einen T-förmigen Querschnitt aufweist, ist es möglich, den Signalgeber in einem Bereich kleineren Durchmessers des Kolbens anzuordnen. Um eine gewünschte Meßgenauigkeit zu erreichen, ist eine entsprechende Genauigkeit einzuhalten, mit der die Sensoreinrichtung relativ zu einer vorgegebenen Position des Signalgebers anzuordnen ist. Die vorgegebene Position für den Signalgeber kann beispielsweise dessen Position sein, die er einnimmt, wenn der Bremszylinder nicht betätigt oder vollständig betätigt wird. Hierbei kann die entsprechende Anordnung der Sensoreinrichtung vereinfacht werden, wenn das Gehäuse Einrichtungen aufweist, die zur Anordnung der Sensoreinrichtung an einer vorgegebenen Position für dieselbe dienen.

Ferner kann eine Kalibriereinrichtung verwendet werden, um in Abhängigkeit von Positionen und/oder Bewegungen des Signalgebers dessen relative Lage zu der Sensoreinrichtung zu ermitteln. Mit der Kalibriereinrichtung kann dann die Sensoreinrichtung kalibriert und/oder deren Positionierung überprüft werden.

Um von der Sensoreinrichtung erfaßte Positionen und Bewegungen des Signalgebers beispielsweise an eine Steuereinrichtung für den Bremszylinder, eine den Bremszylinder umfassende Fahrzeugbremsanlage und/oder andere Steuereinrichtungen zum Betrieb des Kraftfahrzeuges (z.B. ABS, Bremsassistent, Fahrdynamikregelung) zu übertragen, kann die Sensoreinrichtung eine Schnittstelle aufweisen, die entsprechende von der Sensoreinrichtung erzeugte Signale weiterleitet.

Des weiteren ist es vorgesehen, dass bei einer Fahrzeugbremsanlage mit zwei Bremskreisen jedem der Bremskreise eine erfindungsgemäße Vorrichtung zugeordnet ist, um für die einzelnen Bremskreise wirksame Positionen und Bewegungen der Betätigungseinrichtung zu erfassen.

Insbesondere können bei Fahrzeugbremsanlagen mit zwei Bremskreisen, die einen ersten Kolben für einen Bremskreis und einen zweiten Kolben für den anderen Bremskreis aufweisen, Signalgeber an dem ersten Kolben und an dem zweiten Kolben angeordnet sein. Dem entsprechend können den an dem ersten und dem zweiten Kolben angeordneten Signalgebern Sensoreinrichtungen zugeordnet sein, die beispielsweise an entsprechenden Bereichen von Außenflächen des oder der Bremszylinder angebracht sind, der bzw. die die ersten und zweiten Kolben aufweisen.

Außerdem stellt die vorliegende Erfindung eine Fahrzeugbremsanlage bereit, die einen erfindungsgemäßen Bremszylinder und eine Steuereinrichtung aufweist, die zur Steuerung des Betriebes der Fahrzeugbremsanlage zumindest teilweise in Abhängigkeit von erfaßten Positionen und Bewegungen des Signalgebers dient.

Vorzugsweise umfaßt die Fahrzeugbremsanlage eine Simulationseinrichtung, die in Abhängigkeit von erfaßten Positionen und Bewegungen des Signalgebers einem Fahrzeugführer bei Betätigung eines Bremspedals die bei einer konventionellen Bremsanlage übliche Pedalcharakteristik vermittelt, d.h. das Verhalten des Bremspedales simuliert.

### Kurzbeschreibung der Figuren

Bei der folgenden Beschreibung bevorzugter Ausführungsformen wird auf die beigefügten Figuren Bezug genommen, von denen zeigen:
- Fig. 1: eine schematische Darstellung eines Tandem-Hauptzylinders für eine hydraulische Fahrzeugbremsanlage mit einer Ausführungsform der erfindungsgemäßen Vorrich- tung,
- Fig. 2: schematische Darstellungen von Ausführungsformen von Signalgebern für die erfin- dungsgemäße Verrichtung von Fig. 1,
- Fig. 3: eine schematische Darstellung eines Tandem-Hauptzylinders für eine elektronisch gesteuerte hydraulische Fahrzeugbremsanlage mit der Ausführungsform von Fig. 1,
- Fig. 4: eine schematische Darstellung eines Zylinders für eine Fahrzeugbremsanlage mit einer weiteren Ausführungsform der efindungsgemäßen Vorrichtung.

### Beschreibung bevorzugter Ausführungsformen

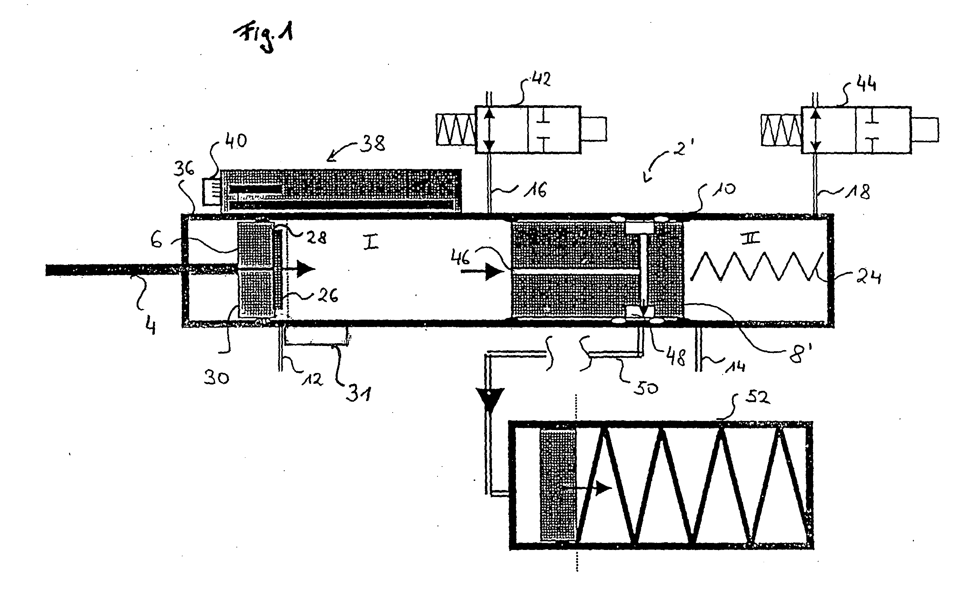

In Fig. 1 ist ein Tandem-Hauptzylinder 2 für eine hydraulische Fahrzeugbremsanlage gezeigt. Der Hauptzylinder 2 ist über ein Betätigungsglied 4 betätigbar, das mit einem in dem Hauptzylinder 2 angeordneten ersten Kolben 6 starr und direkt verbunden ist. Zur Betätigung des Betätigungsgliedes 4 ist dieses unmittelbar oder über einen dazwischen angeordneten Bremskraftverstärker mit einem Bremspedal verbunden. Der erste Kolben 6 begrenzt zusammen mit einem zweiten in dem Hauptzylinder 2 angeordneten Kolben 8 und entsprechenden Innenflächen (nicht bezeichnet) eines Gehäuses 10 des Hauptzylinders 2 erste und zweite Hydraulikkammern I und II. In den Hydraulikkammern I und II ist Hydraulikfluid aufgenommen, das über zugeordnete Versorgungsanschlüsse 12 und 14 zu- oder abfließen kann.

Die Hydraulikkammern I und II stehen über Fluidleitungen 16 und 18 mit Radbremsen 20 und 22 in Verbindung, um diese in Abhängigkeit von einer Betätigung des Hauptzylinders 2 mit Hydraulikfluid zu versorgen. Eine Feder 24 wirkt mit dem zweiten Kolben 8 zusammen, um diesen in Abhängigkeit einer Betätigung des Betätigungsgliedes 4 in dem Hauptzylinder 2 zu positionieren. Ferner bringt die Feder 24 den zweiten Kolben 8 und über die Fluidverbindung in der ersten Hydraulikkammer I den ersten Kolben 6 in deren Ausgangspositionen, wenn der Hauptzylinder 2 nicht betätigt ist.

Da der erste Kolben 6 direkt und starr mit dem Betätigungsglied 4 verbunden ist, entspricht eine Verschiebung des ersten Kolbens 6 unmittelbar einer entsprechenden Bewegung des Betätigungsgliedes 4 und charakterisiert damit die durch einen Fahrzeugführer verursachte Betätigung des Bremspedales, genauer den Pedalweg.

Hierbei entspricht eine Bewegung des ersten Kolbens 6 unmittelbar dem zugrundeliegenden Pedalweg, wenn das Bremspedal direkt mit dem Betätigungsglied 4 verbunden ist. Wird ein zwischen dem Betätigungsglied 4 und dem Bremspedal angeordneter Bremskraftverstärker verwendet, sind dessen Parameter zu berücksichtigen, um aus einer Verschiebung des ersten Kolbens 6 den entsprechenden Pedalweg zu ermitteln.

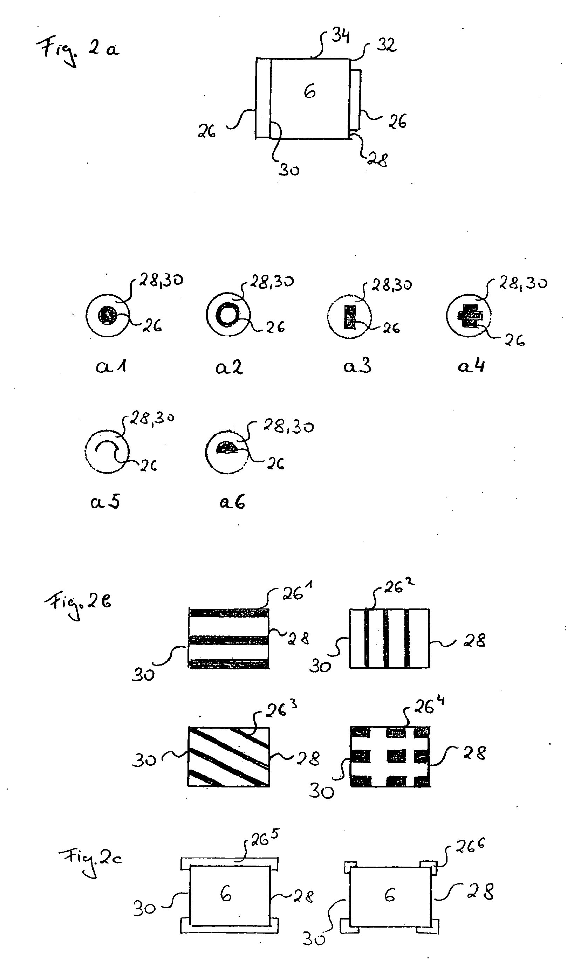

Um bei einer Betätigung des Bremspedals den Pedalweg aus einer daraus resultierenden Verschiebung des ersten Kolbens 6 zu ermitteln, wird ein an dem ersten Kolben 6 ortsfest angebrachter Signalgeber 26 verwendet. Der in Fig. 1 gezeigte Signalgeber 26 ist an einer der ersten Hydraulikkammer I zugewandten Stirnfläche 28 des ersten Kolbens 6 angeordnet, wobei der Signalgeber 26 auch an einer gegenüberliegenden Stirnfläche 30 befestigt sein kann. Weitere mögliche Anordnungen einzelner oder mehrerer Komponenten, die die Funktion des Signalgebers 26 bereitstellen, an dem ersten Kolben 6 sind in Fig. 2 dargestellt. Bei der in Fig. 2a gezeigten Ausführung kann der Signalgeber 26 an der Stirnfläche 28 und/oder der Stirnfläche 30 angeordnet sein, wobei Fig. 2a1 bis a6 eine Auswahl möglicher Formen des Signalgebers 26 darstellen. Hierbei ist zu beachten, dass der Signalgeber 26 die Stirnfläche 28 und/oder die Stirnfläche 30 vollständig bedecken oder bis zu einer Kante 32 reichen kann, die mit einer in axialer Richtung des ersten Kolbens 6 äußeren Umfangsfläche 34 gebildet wird. Bei den in Fig. 2b und 2c gezeigten Ausführungen kann der Signalgeber 26 einzelne oder mehrere (z.B. 2, 4, 5, ...) der Signalgeberkomponenten 26¹ bis 26⁶ und Kombinationen derselben umfassen.

An einer Außenseite 36 des Gehäuses 10 des Hauptzylinders 2 ist eine Sensoreinrichtung 38 angeordnet, die mit dem Signalgeber 26 zusammenwirkt, um Positionen und Bewegungen des ersten Kolbens 6 zu ermitteln. In Abhängigkeit von Positionen und Bewegungen des Signalgebers 26 und damit des ersten Kolbens 6 erzeugt die Sensoreinrichtung entsprechende Signale, die über eine Signalschnittstelle 40 an hier nicht dargestellte Komponenten weiterleiten, die diese zur Steuerung des Betriebs des Kraftfahrzeuges und insbesondere zur Steuerung der Fahrzeugbremsanlage verwenden. Vorteilhafterweise ist die Signaischnittstelle 40 eine bidirektionale Schnittstelle, um die Sensoreinrichtung 38, beispielsweise durch ein Fahrzeugmanagementsystem, zu steuern und zu überwachen.

Die Anordnung des Signalgebers 26 innerhalb des Gehäuses 10 und der Sensoreinrichtung 38 außerhalb des Gehäuses 10 vereinfacht den Aufbau des Hauptzylinders 2, da keine Verbindungen zwischen dem Signalgeber 26 und der Sensoreinrichtung 38 erforderlich sind, die durch das Gehäuse 10 zu führen sind. Des weiteren erlaubt es diese Anordnung, bereits verfügbare Hauptzylinder 2 zu verwenden, die lediglich geringfügig zu modifizieren sind. Hierbei wird für eine ortsfeste Anordnung der Sensoreinrichtung 38 am Gehäuseäußeren gesorgt, die beispielsweise durch Verschrauben, Verkleben, usw. erfolgen kann. Ebenso können verfügbare Kolben für den ersten Kolben 6 verwendet werden, indem eine oder mehrere als Signalgeber 26 dienenden Komponenten verwendet werden, die die technischen Charakteristika des ersten Kolbens 6 nicht wesentlich verändern. Dies ist beispielsweise der Fall, wenn ein als Signalgeber 26 dienendes Bauteil verwendet wird, das geringe Abmessungen aufweist, die das Volumen der ersten Hydraulikkammer I nicht wesentlich beeinflussen, und der mittels einer geeigneten Klebverbindung an dem ersten Kolben 6 angebracht ist.

Als Signalgeber 26 und Sensoreinrichtung 38 können beliebige Komponenten verwendet werden, die geeignet sind, unter Verwendung elektrischer und/oder magnetischer Signale Positionen und Bewegungen des ersten Kolbens 6 ohne eine physikalische Verbindung (z.B. Kabel, Leitung) zwischen dem Signalgeber 26 und der Sensoreinrichtung 38 zu detektieren. Die Anordnung und/oder Form des Signalgebers 26 (siehe Fig. 2) ergibt sich aus der Art der verwendeten Sensoreinrichtung 38 und des Signalgebers 26, des verwendeten Hauptzylinders 2, der Genauigkeit, mit der Positionen und Bewegungen des ersten Kolbens 6 ermittelt werden sollen, und dergleichen.

Bei der in Fig. 1 gezeigten Ausführungsform ist der Signalgeber 26 ein Ring- oder scheibenförmiges Magnetelement. Dessen Magnetfeld, genauer Positionen und Bewegungen des Magnetfeldes, werden von der Sensoreinrichtung 38 erfaßt, um den für eine Betätigung des Hauptzylinders 2 verantwortlichen Pedalweg zu ermitteln.

Bei der Verwendung eines Magnetelementes für den Signalgeber 26 ist für eine zuverlässige Detektion von Positionen und Bewegungen desselben ein Hauptzylinder 2 zu verwenden, dessen Material (Materialien) das Magnetfeld des Signalgebers 26 nicht so verfälschen oder beeinflussen, dass die gewünschte Meßgenauigkeit der Sensoreinrichtung 38 beeinträchtigt wird. Beispielsweise kann das Gehäuse des Hauptzylinders 2 aus dem nicht magnetischen Werkstoff Aluminium hergestellt sein, wodurch sich zusätzlich Gewichtsvorteile ergeben.

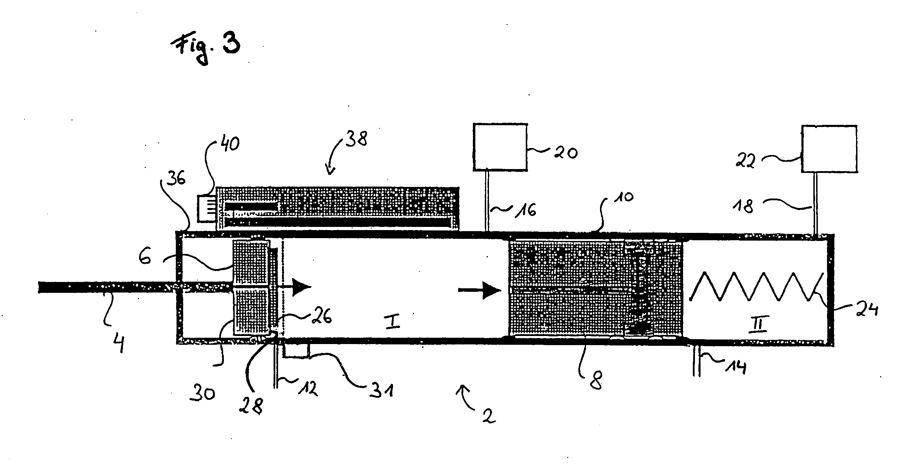

Bei dem in Fig. 3 dargestellten Hauptzylinder für eine elektronisch gesteuerte hydraulische Fahrzeugbremsanlage sind Komponenten, die Komponenten der in Fig. 1 gezeigten Ausführungsform entsprechen, mit gleichen Bezugszeichen versehen. Der in Fig. 3 gezeigte Hauptzylinder 2' ist aus dem deutschen Patent mit der Nummer 199 50 862 bekannt, weshalb hier auf eine detailliertere Erläuterung verzichtet wird.

Der Hauptzylinder 2' ist über die Fluidleitungen 16 und 18 mit Ventileinrichtungen 42 und 44 verbunden, deren Funktion und Betrieb in dem genannten Patent beschrieben sind. Anstelle des zweiten Kolbens 8 wird bei dieser Ausführungsform ein zweiter Kolben 8' verwendet, der in bekannter Weise einen Kanal 46 und einen Auslaß 48 aufweist, um über eine Fluidverbindung 50 mit einer Simulationseinrichtung 52 zusammenzuwirken. Die Simulationseinrichtung 52 dient dazu, einem Fahrer bei einer Betätigung eines (un)mittelbar mit dem Betätigungsglied 4 verbundenen Bremspedales die bei einer konventionellen Bremsanlage übliche Pedalcharakteristik zu vermitteln.

Durch die Verwendung der Sensoreinrichtung 38 in Verbindung mit dem Signalgeber 26 kann die Simulationseinrichtung 52 und insbesondere eine damit verbundene bekannte Charakteristik-Modelliereinrichtung (hier nicht dargestellt) zur Simulation einer Bremspedalcharakteristik dahingehend ergänzt oder ersetzt werden, dass die von der Sensoreinrichtung 38 erfaßten Positionen und Bewegungen des ersten Kolbens 6 zur Ermittlung einer gewünschten Pedalcharakteristik (mit)verwendet werden. Soll die Charakteristik-Modelliereinrichtung so ersetzt werden, kann auf der Grundlage einer so ermittelten Pedalcharakteristik beispielsweise ein mit dem Bremspedal zusammenwirkender elektromechanischer Aktuator entsprechend gesteuert werden. In diesem Fall kann die Simulationseinrichtung 52 durch ein Reservoir für Hydraulikfluid ersetzt werden, das über die Fluidverbindung 50 in Abhängigkeit von einer Betätigung des Hauptzylinders 2' Hydraulikfluid erhält oder abgibt.

Bei nicht dargestellten Ausführungen der in Fig. 1 und 3 dargestellten Anordnungen sind an den zweiten Kolben 8 bzw. 8' ebenfalls Signalgeber angeordnet, die mit diesen zugeordneten Sensoreinrichtungen zusammenwirken, die an den Außenseiten der Hauptzylinder 2 bzw. 2' angeordnet sind. Diese Ausführungsformen erlauben es, Positionen und Bewegungen der ersten und zweiten Kolben 6 und 8 bzw. 8' separat zu erfassen, um, wie oben beschrieben, entsprechende Signale zur Steuerung des Betriebs des Kraftfahrzeuges und insbesondere zur Steuerung der Fahrzeugbremsanlage zu verwenden. Dies hat den Vorteil, dass die tatsächlich auftretenden Positionen und Bewegungen der ersten und zweiten Kolben 6 und 8 bzw. 8' in Antwort auf eine Betätigung des Betätigungsglieds 4 detektiert werden, um für eine optimierte Steuerung insbesondere der Fahrzeugbremsanlage zu sorgen. Ferner wird es auf diese Weise möglich, fehlerhafte Betriebszustände einer Fahrzeugbremsanlage zu erkennen, wenn beispielsweise bei einer Betätigung des Betätigungsglieds 4 einer oder beide der Kolben 6 und 8 bzw. 8' keine entsprechenden, zu erwartenden Positionen einnimmt und/oder Bewegungen ausführt.

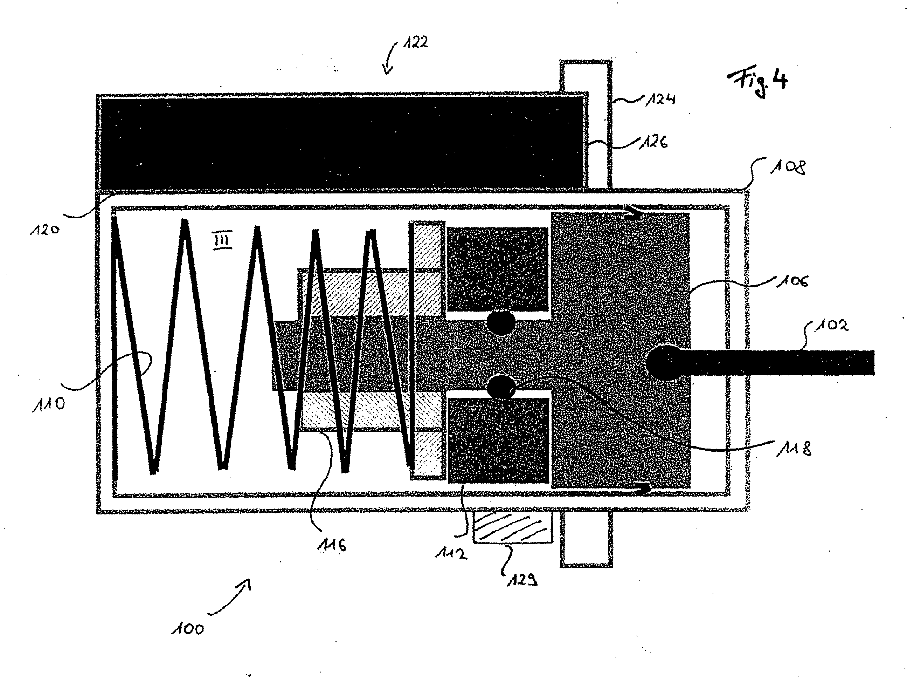

Der in Fig. 4 schematisch dargestellte Zylinder 100 kann ein mit einem Bremskraftverstärker verbundener Hauptzylinder oder ein Zylinder eines Bremskraftverstärkers sein. Wie oben ausgeführt, wird der Zylinder 100 über ein Betätigungsglied 102 betätigt, das mit einem Kolben 106 starr und direkt verbunden ist. Der Kolben 106 ist im Inneren eines Gehäuses 108 des Zylinders 100 angeordnet und wirkt mit einem Federelement 110 zusammen, das die oben beschriebenen Funktionen der Feder 24 bereitstellt. Der Kolben 106 weist in axialer Richtung einen im wesentlichen T-förmigen Querschnitt auf. Ein als ringförmiges Magnetelement ausgeführter Signalgeber 112 ist zwischen einer Stirnfläche 114 des Kolbens 106 und einem Klemmelement 116 relativ zu dem Kolben 106 ortsfest gehalten. Das Klemmelement 116 ist an dem Bereich geringeren Durchmessers des Kolbens 106 angeordnet. Die ortsfeste Anordnung des Signalgebers 112 und des Klemmelementes 116 an dem Kolben 106 wird hier durch das Federelement 110 erreicht, kann aber verbessert werden, indem das Klemmelement 116 beispielsweise durch Verpressen und/oder Verkleben fest mit dem Kolben 106 verbunden ist. Ebenso ist es vorgesehen, den Signalgeber 112 fest mit dem Kolben 106 zu verbinden. Unabhängig von der Anordnung des Signalgebers 112 an dem Kolben 106 kann, wie in Fig. 4 zu sehen, ein ringförmiges Element verwendet werden, um Toleranzen zwischen dem Signalgeber 112 und dem Kolben 106 auszugleichen, wodurch Herstellungskosten aufgrund einzuhaltender Fertigungstoleranzen minimiert werden.

Bei einer nicht gezeigten Ausführungsform wird das Klemmelement 116 nicht verwendet, wobei der Signalgeber 112 von dem Federelement 110 kontaktiert wird. Hierbei kann der Signalgeber 112 die in Fig. 4 dargestellte Form oder die dort für das Klemmelement 116 dargestellte Form aufweisen.

An einer Außenfläche 120 des Gehäuses 108 ist ein Sensorelement 122 ortsfest angeordnet, das wie oben beschrieben, zur Erfassung von Positionen und Bewegungen des Kolbens 106 mit dem Signalgeber 112 zusammenwirkt. Zur ortsfesten Anordnung des Sensorelementes 122 weist ein Befestigungsflansch 124 des Gehäuses 108 einen Anschlag 126 auf. Die Positionierung des Anschlages 126 ist in Abhängigkeit der Größe des Sensorelementes und möglicher Positionen und Bewegungen des Kolbens 106 zu definieren, um eine zuverlässige Ermittlung des Pedalweges zu gewährleisten.

Wie bereits erwähnt, kann es beim "Aufwecken" der Vorrichtung aus einem Ruhezustand mit niedrigem oder keinem Energieverbrauch dazu kommen, dass diese Vorrichtung in einen Betriebszustand gebracht wird, obwohl keine tatsächliche Betätigung der Fahrzeugbremsanlage vorliegt.

Um dieses Problem zu lösen, umfassen die in Fig. 1, 3 und 4 dargestellten Ausführungen zudem Einrichtungen 31 bzw. 129, die auf die Signalgeber 26 bzw. 112 ansprechen. Werden die Kolben 26 bzw. 106 durch eine Betätigung der Betätigungsglieder 4 bzw. 102 aus den in Fig. 5, 6 und 7 dargestellten Ruhepositionen bewegt, wirkt der Signalgeber 26 bzw. 112 so mit der Einrichtung 39 bzw. 129 zusammen, dass diese Signale erzeugt, um zumindest das Sensorelement 38 bzw. 122 und vorzugsweise in Verbindung mit diesem verwendete Komponenten "aufzuwecken", d.h. aus einem Stand-by-Modus in einen Betriebszustand bringt. Für die Einrichtungen 39 und 129 können beispielsweise Reed-Schalter verwendet werden, die den Beginn einer Bewegung der Sensorelemente 26 bzw. 112 aus deren Ruheposition detektieren. Ferner ist es vorgesehen, dass die von den Einrichtungen 31 bzw. 129 erzeugten Signale auch zur Aktivierung von Bremslichtern des Fahrzeuges verwendet werden.

Bei einer Verwendung von Reed-Schaltern für die Einrichtungen 31 bzw. 129 verursacht eine Betätigung der Betätigungsglieder 4 bzw. 102 eine Bewegung der Signalgeber 26 bzw. 112 aus deren Ruheposition, wodurch der Reed-Schalter betätigt wird. Im nicht betätigten Zustand der Fahrzeugbremsanlage kann der Reed-Schalter geöffnet sein und durch eine Bewegung des entsprechenden Signalgebers 26 bzw. 112 geschlossen werden. Der durch den geschlossenen Reed-Schalter fließende Strom kann dann zum Aufwecken der erfindungsgemäßen Vorrichtung verwendet werden. Alternativ ist es vorgesehen, dass der Reed-Schalter geschlossen ist, wenn die Fahrzeugbremsanlage nicht betätigt ist. Um hierbei den Energiebedarf möglichst gering zu halten, kann der Reed-Schalter mit einem Halbleiterbauelement, beispielsweise einem FET, verbunden sein, das einen geringen Energiebedarf hat und bei einer Öffnung des Reed-Schalters in Antwort auf eine Betätigung der Fahrzeugbremsanlage die erfindungsgemäße Vorrichtung "aufweckt".

Bei einer Ausführung der erfindungsgemäßen Vorrichtung mit Signalgebern und Sensorelementen für eine Fahrzeugbremsanlage mit zwei Bremskreisen, ist es vorgesehen, dass jedem der Bremskreise Einrichtungen 31 bzw. 129, beispielsweise in Form von Reed-Schaltern, zugeordnet sind.

## Patentansprüche

1. Vorrichtung zur Ermittlung von Positionen und Bewegungen einer Betätigungseinrichtung (4, 102), für eine Fahrzeugbremsanlage, mit:
- einem Signalgeber (26, 112) und
- einer außerhalb eines Bremszylinders (2, 2', 100) anzuordnenden separat ausgeführten Sensoreinrichtung (38, 122) zur Erfassung von Positionen und Bewegungen des Signalgebers (26, 112),
**gekennzeichnet durch**
- einen in einem Innenraum (I, III) des Bremszylinders (2, 2', 100) einer Fahrzeugbremsanlage in Abhängigkeit von Bewegungen einer Betätigungseinrichtung (4, 102) bewegbar anzuordnenden Signalgeber (26, 112), und
- eine Einrichtung (31, 129) zum Ermitteln des Beginns einer Betätigung der Betätigungseinrichtung (4, 102), wobei die Einrichtung (31, 129) Signale erzeugt, um die Vorrichtung aus einem Ruhezustand, in dem keine Positionen und Bewegungen erfasst werden, in einen Betriebszustand zu bringen, in dem Positionen und Bewegungen der Betätigungseinrichtung (4, 102) erfasst werden.

2. Vorrichtung gemäß Anspruch 1, **dadurch gekennzeichnet, dass** der Signalgeber (26, 112) zur Anordnung an einem Kolben (6, 106) des Bremszylinders (2, 2', 100) ausgelegt ist.

3. Vorrichtung gemäß Anspruch 1 oder 2, **dadurch gekennzeichnet, dass**
- der Signalgeber (26, 112) zur Erzeugung von Magnetfeldern magnetische Elemente umfaßt, und
- die Sensoreinrichtung (38, 122) zur Positions- und Bewegungserfassung für den Signalgeber (26, 112) durch Erfassung der Magnetfelder ausgelegt ist.

4. Vorrichtung gemäß einem der vorhergehenden Ansprüche, **dadurch gekennzeichnet, dass**
der Signalgeber (26, 112) zur Anordnung in dem Innenraum (I, III) des Bremszylinders (2, 2', 100) ringförmig oder scheibenförmig ist.

5. Vorrichtung gemäß einem der vorhergehenden Ansprüche, **dadurch gekennzeichnet, dass**
die Sensoreinrichtung (38, 122) an einer Außenfläche (36, 120) des Bremszylinders (2, 2', 100) angebracht ist.

6. Vorrichtung gemäß einem der vorhergehenden Ansprüche, **dadurch gekennzeichnet, dass**
die Sensoreinrichtung (38, 122) eine Schnittstelle (40) zur Übertragung von Signalen aufweist, die erfaßte Positionen und Bewegungen des Signalgebers (26, 112) charakterisieren.

7. Vorrichtung gemäß Anspruch 1, **dadurch gekennzeichnet, dass**
die Betätigungsermittlungseinrichtung (31, 129) einen Reed-Schalter umfasst, der von dem Signalgeber (26, 112) betätigbar ist.

8. Bremszylinder für eine Fahrzeugbremsanlage, mit:
- einem Gehäuse (10, 108), und
- einem Kolben (6, 106), der im Inneren des Gehäuses (10, 108) bewegbar angeordnet ist,
umfassend eine Vorrichtung zur Ermittlung von Positionen und Bewegungen einer Betätigungseinrichtung (4, 102) gemäß einem der Ansprüche 1 bis 7.

9. Bremszylinder gemäß Anspruch 8, **dadurch gekennzeichnet, dass** der Signalgeber (26, 112) an einer Stirnfläche (28, 30) des Kolbens (6, 106) angebracht ist.

10. Bremszylinder gemäß einem der Ansprüche 8 und 9, **dadurch gekennzeichnet, dass** der Kolben (6, 106) in axialer Richtung einen T-förmigen Querschnitt aufweist, und
- der Signalgeber (26, 112) in einem Bereich kleineren Durchmessers des Kolbens (6, 106) angeordnet ist.

11. Bremszylinder gemäß einem der Ansprüche 8 bis 10, **dadurch gekennzeichnet, dass** der Signalgeber (26, 112) durch ein Federelement (110) relativ zu dem Kolben (6, 106) ortsfest gehalten ist.

12. Bremszylinder gemäß einem der Ansprüche 8 bis 11, **dadurch gekennzeichnet, dass** der Signalgeber (26, 112) durch ein Klemmelement (116) relativ zu dem Kolben (6, 106) ortsfest gehalten ist.

13. Bremszylinder gemäß einem der Ansprüche 8 bis 12, **dadurch gekennzeichnet, dass** das Gehäuse (10, 108) Einrichtungen (124, 126) zur Anordnung der Sensoreinrichtung (38, 122) an einer vorgegebenen Position aufweist.

14. Fahrzeugbremsanlage, mit:
- dem Bremszylinder gemäß einem der Ansprüche 8 bis 13, und
- einer Steuereinrichtung zur Steuerung des Betriebs der Fahrzeugbremsanlage in Abhängigkeit von erfaßten Positionen und Bewegungen des Signalgebers (26, 112).

15. Fahrzeugbremsanlage gemäß Anspruch 14, **gekennzeichnet durch** eine Simulationseinrichtung zur Simulation eines Bremspedalverhaltens eines Bremspedales für die Fahrzeugbremsanlage in Abhängigkeit von erfaßten Positionen und Bewegungen des Signalgebers (26, 112).

## Claims

1. Apparatus for detecting positions and movements of an actuating device (4, 102) for a vehicle brake system, comprising:
- a signal generator (26, 112), and
- a separately constructed sensor device (38, 122) to be disposed outside of a brake cylinder (2, 2', 100) for the detection of positions and movements of the signal generator (26, 112),
**characterized by**
- a signal generator (26, 112) which is to be disposed in an interior (I, III) of the brake cylinder (2, 2', 100) of a vehicle brake system so as to be movable in dependence upon movements of an actuating device (4, 102), and
- means (31, 129) for detecting the start of an actuation of the actuating device (4, 102), wherein the means (31, 129) generates signals to bring the apparatus from a rest state in which no positions and movements are detected into an operating state in which positions and movements of the actuating device (4, 102) are detected.

2. Apparatus according to claim 1, **characterized in that**
the signal generator (26, 112) is designed for arrangement on a piston (6, 106) of the brake cylinder (2, 2', 100).

3. Apparatus according to claim 1 or 2, **characterized in that**
- the signal generator (26, 112) comprises magnetic elements for generating magnetic fields, and
- the sensor device (38, 122) is designed for the detection of positions and movements for the signal generator (26, 112) through detection of the magnetic fields.

4. Apparatus according to one of the preceding claims, **characterized in that** the signal generator (26, 112) for arrangement in the interior (I, III) of the brake cylinder (2, 2', 100) is annular or disk-shaped.

5. Apparatus according to one of the preceding claims, **characterized in that** the sensor device (38, 122) is fitted on an outer surface (36, 120) of the brake cylinder (2, 2', 100).

6. Apparatus according to one of the preceding claims, **characterized in that**
the sensor device (38, 122) comprises an interface (40) for the transmission of signals which characterize detected positions and movements of the signal generator (26, 112).

7. Apparatus according to claim 1, **characterized in that**
the actuation detection means (31, 129) comprises a reed switch operable by the signal generator (26, 112).

8. Brake cylinder for a vehicle brake system, comprising:
- a housing (10, 108), and
- a piston (6, 106) which is disposed movably in the interior of the housing (10, 108), and an apparatus for detecting positions and movements of an actuating device (4, 102) according to one of claims 1 to 7.

9. Brake cylinder according to claim 8, **characterized in that**
the signal generator (26, 112) is fitted on an end face (28, 30) of the piston (6, 106).

10. Brake cylinder according to one of claims 8 and 9, **characterized in that** the piston (6, 106) has a T-shaped cross section in the axial direction, and
- the signal generator (26, 112) is disposed in a region of smaller diameter of the piston (6, 106).

11. Brake cylinder according to one of claims 8 to 10, **characterized in that** the signal generator (26, 112) is held in a fixed manner relative to the piston (6, 106) by a spring element (110).

12. Brake cylinder according to one of claims 8 to 11, **characterized in that** the signal generator (26, 112) is held in a fixed manner relative to the piston (6, 106) by a clamping element (116).

13. Brake cylinder according to one of claims 8 to 12, **characterized in that** the housing (10, 108) comprises devices (124, 126) for the arrangement of the sensor device (38, 122) at a preset position.

14. Vehicle brake system, comprising:
- the brake cylinder according to one of claims 8 to 13, and
- a control device for controlling the operation of the vehicle brake system in dependence upon detected positions and movements of the signal generator (26, 112).

15. Vehicle brake system according to claim 14, **characterized by** a simulating device for simulating a brake pedal behavior of a brake pedal for the vehicle brake system in dependence upon detected positions and movements of the signal generator (26, 112).

## Revendications

1. Dispositif servant à la détermination de positions et de mouvements d'un dispositif d'actionnement (4, 102) pour un système de freinage de véhicule, comportant :
- un transmetteur de signal (26, 112) et
- un élément capteur (38, 122) réalisé séparément et à placer à l'extérieur du cylindre de frein (2, 2', 100) pour détecter des positions et des mouvements du transmetteur de signal (26, 112),
**caractérisé par**
- un transmetteur de signal (26, 112) à placer de manière à pouvoir être déplacé en fonction des mouvements d'un dispositif d'actionnement (4, 102) dans un espace intérieur (I, III) du cylindre de frein (2, 2', 100) d'un système de freinage de véhicule, et
- un organe (31, 129) pour détecter le début de l'actionnement du dispositif d'actionnement (4, 102, ledit organe (31, 129) produisant des signaux pour faire passer le dispositif d'un état de repos dans lequel ne sont détectés ni positions ni mouvements à un état de service dans lequel sont détectés des positions et des mouvements du dispositif d'actionnement (4, 102).

2. Dispositif selon la revendication 1, **caractérisé en ce que** le transmetteur de signal (26, 112) est conçu pour être placé sur un piston (6, 106) du cylindre de frein (2, 2', 100)

3. Dispositif selon la revendication 1 ou 2, **caractérisé en ce que**
- le transmetteur de signal (26, 112) comporte des éléments magnétiques servant à produire des champs magnétiques, et
- l'élément capteur (38, 122) est conçu pour détecter des positions et des mouvements pour le transmetteur de signal (26, 112) par détection des champs magnétiques.

4. Dispositif selon l'une des revendications précédentes, **caractérisé en ce que** le transmetteur de signal (26, 112) à placer dans l'espace intérieur (I, III) du cylindre de frein (2, 2', 100) se présente sous la forme d'un anneau ou sous la forme d'un disque.

5. Dispositif selon l'une des revendications précédentes, **caractérisé en ce que** l'élément capteur (38, 122) est monté sur une surface extérieure (36, 120) du cylindre de frein (2, 2', 100).

6. Dispositif selon l'une des revendications précédentes, **caractérisé en ce que** l'élément capteur (38, 122) présente une interface (40) servant à transmettre des signaux caractéristiques des positions et des mouvements du transmetteur de signal (26, 112) détectés par ledit élément capteur.

7. Dispositif selon la revendication 1, **caractérisé en ce que**
l'élément de détection d'actionnement (31, 129) comprend un commutateur à lames activable à l'aide du transmetteur de signal (26, 112).

8. Cylindre de frein pour un système de freinage de véhicule, comprenant :
- un boîtier (10, 108) et
- un piston (6, 106) disposé de manière à pouvoir être déplacé à l'intérieur du boîtier (10, 108),
comportant un dispositif pour détecter des positions et des mouvements d'un dispositif d'actionnement (4, 102) selon l'une des revendications 1 à 7.

9. Cylindre de frein selon la revendication 8, **caractérisé en ce que** le transmetteur de signal (26, 112) est monté sur une face terminale (28, 30) du piston (6, 106).

10. Cylindre de frein selon l'une des revendications 8 et 9, **caractérisé en ce que** le piston (6, 106) présente une section en forme de T dans le sens axial, et
- le transmetteur de signal (26, 112) est disposé dans une zone de plus faible diamètre du piston (6, 106).

11. Cylindre de frein selon l'une des revendications 8 à 10, **caractérisé en ce que** le transmetteur de signal (26, 112) est maintenu stationnaire par rapport au piston (6, 106) par un élément formant ressort (110).

12. Cylindre de frein selon l'une des revendications 8 et 11, **caractérisé en ce que** le transmetteur de signal (26, 112) est maintenu stationnaire par rapport au piston (6, 106) par un élément de serrage (116).

13. Cylindre de frein selon l'une des revendications 8 et 12, **caractérisé en ce que** le boîtier (10, 108) présente des aménagements (124, 126) servant à positionner l'élément capteur (38, 122) à un emplacement prédéfini.

14. Système de freinage de véhicule, comprenant :
- le cylindre de frein selon l'une des revendications 8 à 13, et
- un organe de commande permettant d'assurer, en fonction des positions et des mouvements du transmetteur de signal (26, 112) détectés, la commande du fonctionnement du système de freinage.

15. Système de freinage de véhicule selon la revendication 14, **caractérisé par** un organe de simulation servant à simuler, en fonction des positions et des mouvements du transmetteur de signal (26, 112) détectés, un comportement de la pédale de frein pour le système de freinage de véhicule freinage.
